# EUROPÄISCHE PATENTSCHRIFT

(11) **EP 1 885 179 B1**
(45) Veröffentlichungstag und Bekanntmachung des Hinweises auf die Patenterteilung: **12.08.2015**
(21) Anmeldenummer: 06723458.3
(22) Anmeldetag: 15.03.2006
(51) Int. Cl.: A01N 43/80, A01P 1/00, A01N 25/22

(54) **WASSERBASIERTE BIT/TMAD FORMULIERUNGEN**
WATER BASED BIT/TMAD FORMULATIONS
FORMULATIONS CONTENANT DU BIT/TMAD A BASE D'EAU

(30) Priorität: 26.03.2005 DE 102005013956
(43) Veröffentlichungstag der Anmeldung: 13.02.2008
(73) Patentinhaber: LANXESS Deutschland GmbH, 50569 Köln (DE)
(72) Erfinder: UHR, Hermann, 51373 Leverkusen (DE); WACHTLER, Peter, 47800 Krefeld (DE)
(86) Internationale Anmeldenummer: PCT/EP2006/002395
(87) Internationale Veröffentlichungsnummer: WO 2006/102994

(56) Entgegenhaltungen:
- EP-A- 0 060 471
- WO-A-94/16564
- WO-A-2004/040980

## Beschreibung

Die Erfindung betrifft wässrige Formulierungen mit einem pH-Wert > 10 von 1,2-Benzisothiazolin-3-on (BIT) und/oder dessen Alkalimetallsalzen und Tetramethylolacetylendiharnstoff (TMAD), Verfahren zur Herstellung dieser Formulierungen sowie deren Verwendung zum Schutz von technischen Materialien und Produkten vor Befall und Zerstörung durch Mikroorganismen.

1,2-Benzisothiazolin-3-on (BIT) bzw. dessen Natrium-, Kalium- und Lithiumsalze sind seit langem in der Praxis verwendete Wirkstoffe zur Herstellung mikrobizid wirksamer Formulierungen. 1,2-Benzisothiazolin-3-on (BIT) zeichnet sich durch eine gute chemische und thermische Stabilität aus und verfügt grundsätzlich über eine breite antimikrobielle Wirkung z.B. gegen Bakterien, Pilze und Hefen. Allerdings ist die Wirksamkeit gegen bestimmte Bakterienarten nicht immer zufrieden stellend und die beobachtete Wirkgeschwindigkeit in manchen Fällen nicht ausreichend zur Vermeidung mikrobiologisch induzierter Materialschäden.

Ein weiterer Nachteil von 1,2-Benzisothiazolin-3-on (BIT) ist dessen schlechte Wasserlöslichkeit. Aus diesem Grund wird BIT im allgemeinen in Form von Alkalimetallsalzen bei hohen pH-Werten formuliert. Um eine ausreichende Löslichkeit zu gewährleisten müssen aber trotz der hohen pH-Werte Cosolventien in Form von wassermischbaren Lösungsmitteln, wie z.B. Propylenglycol eingesetzt werden (vgl. US-A 4.188.376; WO 94/16564).

Zur Vermeidung der o.g. Wirkungslücken und dem langsamen Wirkeintritt wird BIT in der Praxis in Kombination mit anderen Wirkstoffen eingesetzt. Beispielsweise können die erwünschten Eigenschaften dadurch erreicht werden, dass man BIT in Kombination mit Formaldehyd oder Formaldehyd-Depotstoffen einsetzt. Zur Vermeidung von toxikologisch unerwünschten Effekten, hervorgerufen durch freien Formaldehyd, kann man chemisch gebundenes Formaldehyd, z.B. in Form von N-Formalen (N-Hydroxymethyl Verbindungen) als Mischungspartner einsetzen. So sind beispielsweise diverse Mischungen / Synergien von Benzisothiazolinon mit N-Formalen beschrieben, z.B. mit 1,3-Bis(hydroxymethyl)-5,5-dimethylhydantoin (vgl. EP-A 1225803) oder Tetramethylolacetylendiharnstoff (vgl. EP-A 0060471; EP-A 1249166; DE-A 10251915). Nachteilig an diesen bekannten synergistischen Mischungen aus 1,2-Benzisothiazolin-3-on (BIT) und einem N-Formal ist, dass es bisher nicht möglich war diese ohne Zusatz von Lösungsmitteln in eine Darbietungsform / Formulierung zu bringen, die einerseits eine einfache Applikation ermöglicht (z.B. pumpbare Lösung) und andererseits auch längere Zeit ohne Verlust der chemischen, physikalischen und biologischen Eigenschaften lagerbar ist. Aus ökologischen und toxikologischen Gründen ist es aber wünschenswert in den Formulierungen neben den Wirkstoffen möglichst keine weiteren organischen Stoffe wie z.B. Lösungsmittel und Cosolventien, vor allem aber keine solchen Zusatzstoffe mit VOC's (volatile organic compounds) einzusetzen. Durch die Art der Formulierung darf sich auch bei Lagerung der Anteil an freiem Formaldehyd nicht verändern und sollte insgesamt 1 % nicht übersteigen.

Formulierungen mit den obigen Anforderungen sind schwierig zu realisieren, weil hier gegenläufige Anforderungen gestellt werden. Zum einen muss man, um eine möglichst gute Löslichkeit von 1,2-Benzisothiazolin-3-on (BIT) in Wasser zu erreichen einen möglichst hohen pH Wert einstellen, zum anderen sind Mischungen aus 1,2-Benzisothiazolin-3-on (BIT) bzw. dessen Alkalimetallsalzen und N-Methylol-Verbindungen unter diesen Bedingungen im allgemeinen nicht stabil und man beobachtet bei der Lagerung eine Abnahme der ursprünglich eingesetzten 1,2-Benzisothiazolin-3-on Menge.

Betrachtet man z.B. eine Mischungen aus BIT und DMDMH (1,3-Bis(hydroxymethyl)-5,5-di-methylimidazolidine-2,4-dione), so ist selbst durch Einstellen von hohen pH-Werten nur durch Einsatz von Cosolventien eine klare Lösung zu erhalten und die Formulierung selbst bei geringeren pH Werten nicht längere Zeit ohne Abbau von haltbar.

Aufgabe der vorliegenden Erfindung war es daher Formulierungen aus BIT und einem Formaldehydabspalter bereitzustellen, die vorzugsweise lösungsmittelfrei sind und bei denen sich auch bei Lagerung der Anteil an freiem Formaldehyd nicht verändert.

Es wurde nun überraschenderweise gefunden, dass wässrige, alkalische Formulierungen mit einem pH-Wert > 10 enthaltend 1,2-Benzisothiazolin-3-on (BIT) und/oder dessen Alkalimetallsalze und Tetramethylolacetylendiharnstoff (TMAD) ohne Zusatz von Lösungsmitteln und/oder Cosolventien hergestellt werden können, die über eine gute Langzeitstabilität verfügen.

Gegenstand der vorliegenden Erfindung sind wässrige, alkalische Formulierungen mit einem pH-Wert > 10 enthaltend 1,2-Benzisothiazolin-3-on (BIT) und/oder dessen Alkalimetallsalze und Tetramethylolacetylendiharnstoff (TMAD).

Die erfindungsgemäßen Formulierungen enthalten 1,2-Benzisothiazolin-3-on (BIT) und/oder dessen Natrium-, Kalium- oder Lithiumsalze oder Mischungen davon. Die Mengen an 1,2-Benzisothiazolin-3-on (BIT) und/oder dessen Natrium-, Kalium- oder Lithiumsalze oder Mischungen davon und Tetramethylolacetylendiharnstoff (TMAD) in den erfindungsgemäßen Formulierungen können über einen weiten Bereich variieren. Im allgemeinen liegt das Verhältnis von 1,2-Benzisothiazolin-3-on (BIT) und/oder dessen Natrium-, Kalium- oder Lithiumsalzen oder Mischungen davon zu Tetramethylolacetylendiharnstoff (TMAD) in den erfindungsgemäßen Formulierungen im Gewichtsverhältnis von 9 : 1 bis 1 : 9, bevorzugt von 5 : 1 bis 1: 7, besonders bevorzugt von 1:1 bis 1:7.

Die erfindungsgemäßen Formulierungen enthalten die Wirkstoffe 1,2-Benzisothiazolin-3-on (BIT) und/oder dessen Natrium-, Kalium oder Lithiumsalze oder Mischungen davon und Tetramethylolacetylendiharnstoff (TMAD), gerechnet als Summe beider Komponenten, in einer Konzentration von 5 bis 80 Gew.-%, vorzugsweise 10 bis 60 Gew.-%.

Die erfindungsgemäßen Formulierungen enthalten 1,2-Benzisothiazolin-3-on (BIT) und/oder dessen Natrium-, Kalium- oder Lithiummetallsalze oder Mischungen davon. Die Mengen an BIT und/oder dessen Alkalimetallsalze in der Formulierung liegen im allgemeinen bei 0,5 bis 30 Gew.-% bezogen auf, vorzugsweise bei.1 bis 25 Gew.-%, insbesondere bei 2 bis 20 Gew.-% jeweils bezogen auf das Gesamtgewicht der Formulierung die erfindungsgemäßen Formulierungen enthalten TMAD im allgemeinen in einer Menge von 3 bis 70 Gew.-%, vorzugsweise von 5 bis 60 Gew.-% und insbesondere von 10 bis 50 Gew.-% jeweils bezogen auf das Gesamtgewicht der Formulierung.

Die erfindungsgemäßen Formulierungen weisen im allgemeinen einen pH-Wert > 10 auf. Bevorzugt beträgt der pH-Wert 10 bis 14, besonders bevorzugt 10 - 13 und ganz besonders bevorzugt 10 -12.

Die erfindungsgemäßen Formulierungen zeichnen sich durch eine ausgezeichnete Langzeitstabilität aus. Hierbei ist weder signifikanter Wirkstoffabbau zu beobachten, noch Trübung, Ausfällungen, stärkere pH-Verschiebungen. Es wurde außerdem gefunden, dass der Anteil an freiem Formaldehyd in der Formulierung sehr gering ist und im allgemeinen bei < 1 %, insbesondere bei < 0,5 % liegt und sich im Laufe der Lagerung auch nicht signifikant verändert.

Die erfindungsgemäßen Formulierungen sind vorzugsweise frei von Lösungsmitteln und Cosolventien. Gegebenenfalls können die erfindungsgemäßen Formulierungen Cosolventien in geringen Mengen von 0 bis 5 Gew.-%, vorzugsweise von 0 bis 3 Gew.-% und insbesondere von 0 bis 1 Gew.-% enthalten.

Die erfindungsgemäßen Formulierungen können hergestellt werden indem man
a) BIT und/oder dessen Natriumsalz und/oder dessen Kaliumsalz und/oder dessen Lithiumsalz in Wasser, gegebenenfalls unter Zusatz von Natriumhydroxyd, Kaliumhydroxyd, Lithiumhydroxid oder Mischungen davon, löst, und diese Lösung
b) mit einer Lösung von Tetramethyloldiharnstoff (TMAD) in Wasser und
c) gegebenenfalls mit einem Cosolvens
vermischt, und den pH Wert der Gesamtformulierung gegebenenfalls durch Zugabe von. Natrium-hydroxyd, Kaliumhydroxyd, Lithiumhydroxid oder Mischungen davon auf einen Wert von > 10 einstellt.

Die zur Herstellung der erfindungsgemäßen Formulierungen eingesetzte alkalische 1,2-Benzisothiazolin-3-on (BIT) Lösung lässt sich entweder dadurch herstellen, dass man 1,2-Benzisothiazolin-3-on Natrium-, Kalium- oder Lithium-Salz in Wasser löst und gegebenenfalls noch NaOH, KOH oder LiOH zur Einstellung höherer pH -Werte hinzufügt oder indem man von 1,2-Benzisothiazolin-3-on ausgeht und die Salze durch Zugabe von NaOH, KOH oder LiOH, oder Mischungen hieraus in Wasser herstellt.

Die zur Herstellung der erfindungsgemäßen Formulierungen eingesetzte Lösung von Tetra-methylolacetylendiharnstoff (TMAD) kann entweder analog zu der in EP-A 0060471 beschriebenen Methode hergestellt werden oder man setzt handelsübliche Lösungen von Tetramethylolace-tylendiharnstoff (TMAD) wie z.B. Acticide^{®} F(N) oder Protectol^{®} TD ein.

Als gegebenenfalls einzusetzende Cosolventien verwendet man im allgemeinen wassermischbare Lösungsmittel wie z.B.:
Alkohole wie Butanol, Glycerin, Glykole sowie deren Ether und Ester, Ketone wie Aceton, Methylethylketon, Methylisobutylketon oder Cyclohexanon, sowie stark polare Lösungsmittel wie Dimethylformamid, Dimethylsulfoxid, N-Methylpyrrolidon.

Die Menge an Cosolventien liegt im allgemeinen unterhalb von 5 Gew-%, bevorzugt ist die Menge kleiner 3 Gew.-%, besonders bevorzugt kleiner 1 Gew-%.

Die erfindungsgemäßen Formulierungen eignen sich zum Schutz von technischen Materialien und Produkten vor Befall und Zerstörung durch Mikroorganismen.

Bevorzugt können mit den erfindungsgemäßen Formulierungen funktionelle Flüssigkeiten und wasserhaltige technische Produkte, die anfällig sind gegen den Befall durch Mikroorganismen, konserviert werden.

Beispielhaft, jedoch ohne zu limitieren seien die folgenden funktionelle Flüssigkeiten und wasserhaltige technische Produkte genannt die bevorzugt mit den erfindungsgemäßen Formulierungen geschützt werden können:
- Anstrichmittel, Farben, Putze und sonstige Beschichtungsmittel
- Stärke-Lösungen und -slurrys oder andere auf Basis von Stärke hergestellte Produkte wie z.B. Druckverdicker
- Slurrys anderer Rohstoffe wie Farbpigmente (z.B. Eisenoxidpigmente, Rußpigmente, Titandioxidpigmente) oder Slurrys von Füllstoffen und Streichpigmenten wie Kaolin, Calciumcarbonat oder Talkum
- Bauchemische Produkte wie Betonadditive beispielsweise auf Basis von Melasse, Ligninsulfonat oder Polyacrylaten, Bituimenemulsionen oder Fugendichtungsmassen
- Leime oder Klebstoffe auf Basis der bekannten tierischen, pflanzlichen oder synthetischen Rohstoffe
- Polymerdispersionen auf Basis von z.B. Polyacrylat, Polystyrolacrylat, Styrolbutadien, Polyvinylacetat u.a.
- Detergentien und Reinigungsmittel für den technischen und Haushaltsbedarf
- Mineralöle und Mineralölprodukte (wie z.B. Dieselkraftstoffe)
- Kühlschmierstoffe zur Metallverarbeitung auf Basis von Mineralöl-haltigene, halbsynthetischen oder synthetischen Konzentraten
- Hilfsmittel für die Leder-, Textil- oder photochemische Industrie
- Vor- und Zwischenprodukte der chemischen Industrie, z.B. bei der Farbstoff-produktion und-lagerung
- Tinten oder Tuschen
- Wachs und Tonemulsionen

Die erfindungsgemäßen Formulierungen werden im Materialschutz zum Schutz technischer Materialien, insbesondere zum Schutz von wässrigen funktionellen Flüssigkeiten verwendet; sie sind wirksam gegen Bakterien, Schimmelpilze, Hefen sowie gegen Schleimorganismen. Beispielhaft, jedoch ohne zu limitieren seien die folgenden Mikroorganismen genannt:
Alternaria wie Alternaria tenuis, Aspergillus wie Aspergillus niger, Chaetomium wie Chaetomium globosum, Fusarium wie Fusarium solani, Lentinus wie Lentinus tigrinus, Penicillium wie Penicillium glaucum;
Alcaligenes wie Alcaligenes faecalis, Bacillus wie Bacillus subtilis, Escherichia wie Escherichia coli, Pseudomonas wie Pseudomonas aeruginosa oder Pseudomonas fluorescens, Staphylococcus wie Staphylococcus aureus;
Candida wie Candida albicans, Geotrichum wie Geotrichum candidum, Rhodotorula wie Rhodotorula rubra.

Die erfindungsgemäßen Formulierungen können zusätzlich noch einen oder mehrere weitere biozide Wirkstoffe enthalten. Als Mischungspartner seien die Verbindungen
Benzylhemiformal
Bronopol
Chlormethylisothiazolinon
p-Chlor-m-kresol
Dimethylolharnstoff
4,5-Dichlor-2-n-octylisothiazolin-3-on
1,2-Dibrom-2,4-dicaynobutan
2,2-Dibrom-3-nitrilopropionsäureamid
Ethylenglykolhemiformal
Ethylenglykol-bis-hemiformal
Glutaraldehyd
Iodpropargylbutylcarbamat
N-Methylolharnstoff
2-n-Octylisothiazolin-3-on
2- Phenoxyethanol
Phenoxypropanol
o-Phenyl-phenol
Quatäre Ammoniumsalze, wie z.B. N-Alkyl-N,N-dimethyl-benzly-ammoniumchlorid
Trimethylen-2-methylisothiazolinon-3-on
und ggf. weitere Stoffe genannt.

Hier werden häufig noch weitere synergistische Effekte beobachtet.

Die Anwendungskonzentrationen der erfindungsgemäß zu verwendenden Wirkstoffformulierungen richtet sich nach der Art und dem Vorkommen der zu bekämpfenden Mikroorganismen, der mikrobiellen Ausgangsbelastung sowie nach der Zusammensetzung des zu schützenden Materials. Die optimale Einsatzmenge für eine bestimmte Anwendung kann vor dem Praxiseinsatz durch Testreihen im Labor ermittelt werden. Im allgemeinen liegen die Anwendungskonzentrationen im Bereich von 0,01 bis 5 Gew.-%, vorzugsweise von 0,05 bis 1,0 Gew.-% der erfindungsgemäßen Mischung, bezogen auf das zu schützende Material.

### Beispiel 1

104 g 1,2-Benzisothiazolin-3-on (BIT) (79 % ig) wurden in 380 ml VE-Wasser aufgeschlämmt und mit 108 g einer 45 % igen KOH Lösung versetzt. Hierzu gab man 600 g einer 70 %igen Lösung von TMAD in Wasser. Weitere 309 g VE-Wasser wurden zugegeben.

Die klare Lösung hatte einen pH Wert von 10,9 und einen mit HPLC gemessenen Gehalt an BIT von 5,7 %. Nach 5 monatiger Lagerung bei 40 °C war die Lösung klar. Nach 5 monatiger Lagerung bei 20 °C war die Lösung klar und der Gehalt an 1,2-Benzisothiazolin-3-on betrugt 5,4 %.

### Beispiel für eine Vergleichsformulierung mit Cosolvens und pH = 9,5

18 g 1,2-Benzisothiazolin-3-on (BIT) (84 %ig) wurden in 105 ml VE Wasser aufgeschlämmt. Durch langsame Zugabe von 6,26 g KOH Plätzchen wurde der pH Wert auf 9,5 eingestellt. Zu dieser nahezu klaren Lösung gab man 199 g Tetramethylolacetylendiharnstoff (TMAD) (70 %ig) und 45 g Propylenglycol. Durch weitere Zugabe von 0,6 g KOH wurde der pH-Wert auf 9,5 nach-justiert. Man erhielt eine klare Lösung mit 4,86 % BIT.

Nach einer Woche Lagerung bei Raumtemperatur wurde eine Trübung der Lösung und nach 1 Woche bei 40 °C ein Bodensatz beobachtet.

## Patentansprüche

1. Wässrige, alkalische Formulierungen mit einem pH-Wert > 10 enthaltend 1,2-Benzisothiazolin-3-on (BIT) und/oder dessen Alkalimetallsalze und Tetramethylolacetylendiharnstoff (TMAD).

2. Formulierungen gemäß Anspruch 1, **dadurch gekennzeichnet, dass** das Gewichtsverhältnis von 1,2-Benzisothiazolin-3-on (BIT) und/oder dessen Natrium-, Kalium- oder Lithiumsalzen oder Mischungen zu Tetramethylolacetylendiharnstoff (TMAD) 9:1 bis 1:9 beträgt.

3. Formulierungen gemäß wenigstens einem der Ansprüche 1 und 2, **dadurch gekennzeichnet, dass** die Summe der Komponenten 1,2-Benzisothiazolin-3-on (BIT) und/oder dessen Natrium-, Kalium- oder Lithiumsalze oder Mischungen davon und Tetramethylolacetylendiharnstoff (TMAD) 5 bis 80 Gew.-% beträgt.

4. Formulierungen gemäß wenigstens einem der Ansprüche 1 bis 3, **dadurch gekennzeichnet, dass** der pH-Wert 10 bis 14 beträgt.

5. Formulierungen gemäß wenigstens einem der Ansprüche 1 bis 4, **dadurch gekennzeichnet, dass** mindestens ein Cosolvens in einer Menge von 0 bis 5 Gew.-% bezogen auf das Gesamtgewicht der Formulierung enthalten ist.

6. Formulierungen gemäß wenigstens einem der Ansprüche 1 bis 5, **dadurch gekennzeichnet, dass** der Anteil an freiem Formaldehyd in der Formulierung bei < 1 Gew.-% liegt.

7. Verfahren zur Herstellung einer Formulierung gemäß Anspruch 1, **dadurch gekennzeichnet, dass** man
a) BIT und/oder dessen Natrium-, Kalium- oder Lithiumsalz oder Mischungen davon in Wasser, gegebenenfalls unter Zusatz von Natriumhydroxyd, Kaliumhydroxyd, Lithiumhydroxid oder Mischungen davon, löst, und die so erhaltene Lösung mit
b) einer Lösung von Tetramethyloldiharnstoff (TMAD) in Wasser, und gegebenenfalls
c) mit mindestens einem Cosolvens
vermischt, und den pH Wert der Gesamtformulierung gegebenenfalls durch Zugabe von Natriumhydroxyd, Kaliumhydroxyd, Lithiumhydroxid oder Mischungen davon auf einen Wert von > 10 einstellt.

8. Verwendung einer Formulierung gemäß Anspruch 1 zum Schutz von technischen Materialien und Produkten vor Befall und Zerstörung durch Mikroorganismen.

9. Verwendung gemäß Anspruch 8, **dadurch gekennzeichnet, dass** es sich bei den zu schützenden technischen Materialien um funktionelle Flüssigkeiten und wasserhaltige technische Produkte handelt.

10. Verfahren zum Schutz von technischen Materialien vor Befall und Zerstörung durch Mikroorganismen, **dadurch gekennzeichnet, dass** man das technische Material mit einer Formulierung gemäß Anspruch 1 behandelt.

## Claims

1. Aqueous alkaline formulations having a pH of > 10, comprising 1,2-benzoisothiazolin-3-one (BIT) and/or its alkali metal salts and tetramethylolacetylenediurea (TMAD).

2. Formulations according to Claim 1, **characterized in that** the weight ratio of 1,2-benzoisothiazolin-3-one (BIT) and/or its sodium, potassium or lithium salts or mixtures to tetramethylolacetylenediurea (TMAD) is 9:1 to 1:9.

3. Formulations according to at least one of Claims 1 and 2, **characterized in that** the sum of the components 1,2-benzoisothiazolin-3-one (BIT) and/or its sodium, potassium or lithium salts or mixtures thereof and tetramethylolacetylenediurea (TMAD) is 5 to 80% by weight.

4. Formulations according to at least one of Claims 1 to 3, **characterized in that** the pH is 10 to 14.

5. Formulations according to at least one of Claims 1 to 4, **characterized in that** at least one cosolvent is present in an amount of 0 to 5% by weight based on the total weight of the formulation.

6. Formulations according to at least one of Claims 1 to 5, **characterized in that** the proportion of free formaldehyde in the formulation is < 1% by weight.

7. Process for preparing a formulation according to Claim 1, **characterized in that**
a) BIT and/or its sodium, potassium or lithium salt or mixtures thereof is dissolved in water, optionally with addition of sodium hydroxide, potassium hydroxide, lithium hydroxide or mixtures thereof, and the solution thus obtained is mixed with
b) a solution of tetramethylolacetylenediurea (TMAD) in water, and optionally
c) with at least one cosolvent,
and the pH of the overall formulation is optionally adjusted to a value of > 10 by adding sodium hydroxide, potassium hydroxide, lithium hydroxide or mixtures thereof.

8. Use of a formulation according to Claim 1 for protecting industrial materials and products from infection and destruction by microorganisms.

9. Use according to Claim 8, **characterized in that** the industrial materials to be protected are functional liquids and aqueous industrial products.

10. Method for protecting industrial materials from infection and destruction by microorganisms, **characterized in that** the industrial material is treated with a formulation according to Claim 1.

## Revendications

1. Compositions aqueuses alcalines ayant un pH > 10, contenant de la 1,2-benzisothiazolin-3-one (BIT) et/ou ses sels de métaux alcalins et de la tétraméthylolacétylènediurée (TMAD).

2. Compositions selon la revendication 1, **caractérisées en ce que** le rapport pondéral de la 1,2-benzisothiazolin-3-one (BIT) et/ou de ses sels de sodium, potassium ou lithium ou mélanges de ceux-ci à la tétraméthylolacétylènediurée (TMAD) vaut de 9:1 à 1:9.

3. Compositions selon au moins l'une quelconque des revendications 1 et 2, **caractérisées en ce que** la somme des composants 1,2-benzisothiazolin-3-one (BIT) et/ou ses sels de sodium, potassium ou lithium ou mélanges de ceux-ci et tétraméthylolacétylènediurée (TMAD) vaut de 5 à 80 % en poids.

4. Compositions selon au moins l'une quelconque des revendications 1 à 3, **caractérisées en ce que** le pH vaut de 10 à 14.

5. Compositions selon au moins l'une quelconque des revendications 1 à 4, **caractérisées en ce qu'**au moins un cosolvant est contenu en une quantité de 0 à 5 % en poids par rapport au poids total de la composition.

6. Compositions selon au moins l'une quelconque des revendications 1 à 5, **caractérisées en ce que** la proportion de formaldéhyde libre dans la composition vaut < 1 % en poids.

7. Procédé pour la préparation d'une composition selon la revendication 1, **caractérisé en ce que**
a) on dissout de la BIT et/ou ses sels de sodium, potassium ou lithium ou mélanges de ceux-ci dans de l'eau, éventuellement avec addition d'hydroxyde de sodium, hydroxyde de potassium, hydroxyde de lithium ou de mélanges de ceux-ci, et on mélange la solution ainsi obtenue avec
b) une solution de tétraméthylolacétylènediurée (TMAD) et éventuellement
c) avec au moins un cosolvant,
et on ajuste le pH de la composition totale à une valeur de > 10 éventuellement par addition d'hydroxyde de sodium, hydroxyde de potassium, hydroxyde de lithium ou de mélanges de ceux-ci.

8. Utilisation d'une composition selon la revendication 1, pour la protection de matériaux et produits industriels contre l'attaque et la destruction par des micro-organismes.

9. Utilisation selon la revendication 8, **caractérisée en ce que** les matériaux industriels à protéger consistent en des liquides fonctionnels et des produits industriels contenant de l'eau.

10. Procédé pour la protection de matériaux industriels contre l'attaque et la destruction par des micro-organismes, **caractérisé en ce qu'**on traite le matériau industriel par une composition selon la revendication 1.
